# EUROPÄISCHE PATENTANMELDUNG

(11) **EP 4 230 465 A1**
(43) Veröffentlichungstag der Anmeldung: **23.08.2023**
(21) Anmeldenummer: 22215010.4
(22) Anmeldetag: 20.12.2022
(51) Int. Cl.: B60L 5/08, B60L 5/12, B60L 5/38, B60L 5/40

(54) **STROMABNEHMER UND SCHLEIFLEITUNGSSYSTEM**

(30) Priorität: 16.02.2022 DE 102022103679
(71) Anmelder: Conductix-Wampfler GmbH, 79576 Weil am Rhein (DE)
(72) Erfinder: Seidel, Dieter, 79585 Steinen (DE)
(74) Vertreter: Charrier Rapp & Liebau

(57) **Zusammenfassung**

Die Erfindung betrifft einen Stromabnehmer (6) zur elektrischen Versorgung eines längs einer Schleifleitung (2) bewegbaren elektrischen Verbrauchers, mit mindestens einem längs der Schleifleitung (2) verfahrbaren Schleifkontakt (7) zur schleifenden Kontaktierung mit einem in eine Längsrichtung (L) der Schleifleitung (2) verlaufenden elektrisch leitenden Leiterprofil (4) der Schleifleitung (2), wobei der Schleifkontakt (7) an einem an einer Basis (24) des Stromabnehmers (6) angeordnetem Abnehmerarm (14) in eine Zustellrichtung (Z) zu und von der Schleifleitung (2) weg bewegbar angeordnet ist, wobei die Längsrichtung (L) und die Zustellrichtung (Z) eine Zustellebene (E) aufspannen, sowie ein Schleifleitungssystem (1) mit einer in eine Längsrichtung (L) verlaufenden Schleifleitung (2) mit einem in Längsrichtung (L) verlaufenden elektrisch leitenden Leiterprofil (4) und einem Stromabnehmer (6) zur elektrischen Versorgung eines längs der Schleifleitung (2) bewegbaren elektrischen Verbrauchers. Die Erfindung löst die Aufgabe, eine einfache elektrische Versorgung des Stromabnehmers sowie eine gleichmäßige Kontaktierung der Schleifleitung durch den Schleifkontakt bereitzustellen, durch einen Stromabnehmer, bei dem der Schleifkontakt (7) über ein Schleifkontaktgelenk (11) beweglich und elektrisch leitend mit dem elektrisch leitfähigen Abnehmerarm (14) oder einem in dem Abnehmerarm (14) und/oder daran angeordneten elektrischen Leiter verbunden ist, sowie durch ein Schleifleitungssystem (1) mit einem solchen Stromabnehmer (6).

## Beschreibung

Die Erfindung betrifft einen Stromabnehmer nach dem Oberbegriff des Anspruchs 1 sowie ein Schleifleitungssystem nach dem Oberbegriff des Anspruchs 15.

Die DE 10 2015 101 849 A1 offenbart einen Stromabnehmer für einen in eine Fahrrichtung längs einer Schleifleitung verfahrbaren elektrischen Verbraucher, mit mindestens einem Schleifstück, das um eine senkrecht zur Fahrrichtung verlaufende Drehachse an einem Kipparm drehbar gelagert ist, durch den das Schleifstück zur Kontaktierung mit einem elektrisch leitenden Leiterstrang der Schleifleitung zum Leiterstrang hin bewegbar ist, und einem das Schleifstück elektrisch leitend mit einer Anschlussklemme für die elektrischen Verbraucher verbindenden Anschlusskabel, sowie ein Schleifleitungssystem mit einer Schleifleitung und mindestens einem an der Schleifleitung in deren Längsrichtung verfahrbaren elektrischen Verbraucher, wobei die Schleifleitung mindestens einen elektrisch leitenden Leiterstrang zur gleitenden Kontaktierung mit mindestens einem Schleifstück eine Stromabnehmers aufweist. Dabei ist das Anschlusskabel durchgehend in einem zumindest durch den Kipparm verlaufenden Kabelführungskanal geführt, um das Anschlusskabel vor Beschädigungen zu schützen. Allerdings ist dort das Anschlusskabel in dem offen liegenden Bereich zwischen dem Austritt des Anschlusskabels aus dem Kipparm und dem Anschluss am Schleifkontakthalter ungeschützt. Da das Anschlusskabel aufgrund der hohen zu führenden Ströme einen relativ großen Leitungsdurchmesser benötigt, ist es wenig flexibel und behindert auch aufgrund seiner starken Krümmung die freie Beweglichkeit der Schleifkontakte. Beispielsweise werden die Schleifkontakte dadurch oft ungünstig auf einer Seite stärker gegen die Schleifleitung gedrückt und dort schneller und einseitig abgenutzt.

Die US 5, 505,283 offenbart einen Stromabnehmer für einen elektrischen Oberleitungsbus mit einem kanalförmigen Schuh zum gleitenden Eingriff mit einem leitenden Draht. Der Schuh ist auf dem obersten Element eines Kugelgelenks montiert und weist ein Ableitelement auf, das sich durch das unterste Element des Kugelgelenks erstreckt, um elektrischen Strom von dem Drehgelenk zu einem Übertragungskabel zur Einspeisung von elektrischem Strom in den Oberleitungsbus zu führen. Das Ableitelement umfasst eine flexible Länge eines leitenden Kabels mit einem an einem ersten Ende befestigten Graphitkontakt und einem an einem zweiten Ende befestigten Kupferkontakt und eine Schraubenfeder, um die zwei Kontakte gegen ihre jeweiligen benachbarten leitenden Elemente vorgespannt zu halten.

Die DE 197 55 215 A1 offenbart einen Stromabnehmer für eine Schleifleitungsstromschiene welcher aus einer um eine Schwenkachse verschwenkbar und in Richtung der Schwenkachse hin- und herbewegbar gelagerten Schleifkontaktstückeaufnahme aus Isolierkunststoff besteht, in welcher hintereinander zumindest zwei Schleifkontaktstücke aus einem elektrisch leitenden Material jeweils um eine zur Schwenkachse senkrechte Lagerachse im Klemmsitz auf einer Schwenklagerung gehalten sind. Dabei sind die Schleifkontaktstücke mit einer auf der den Schleifkontaktstücken abgewandten Seite der Schleifkontaktstückeaufnahme zwischen den Schleifkontaktstücken angeordneten, verrastet in der Schleifkontaktstückeaufnahme gehaltenen Anschlussfahne elektrisch leitend verbunden.

Die US 3,008, 015 offenbart eine Vorrichtung zum Abnehmen von elektrischem Strom von einem Kraftübertragungselement und insbesondere eine solche Vorrichtung, die auf einer mobilen Einheit montiert ist und in Kontakt mit dem Kraftübertragungselement arbeitet.

Den oben genannten bekannten Stromabnehmern ist gemeinsam, dass die elektrische Verbindung der Schleifkontakte jeweils über ein eigenständiges Leitungskabel mit der Basis und dem elektrischen Verbraucher verbunden ist, welches aufgrund der hohen Ströme wenig flexibel und relativ schwer ist ist und dadurch die freie Beweglichkeit der Schleifkontakte behindert.

Aufgabe der Erfindung ist es deshalb, einen Stromabnehmer sowie ein Schleifleitungssystem bereitzustellen, welche die oben genannten Nachteile überwinden und eine einfache elektrische Versorgung des Stromabnehmers sowie eine gleichmäßige Kontaktierung der Schleifleitung durch den Schleifkontakt bereitstellen.

Die Erfindung löst diese Aufgabe durch einen Stromabnehmer mit den Merkmalen des Anspruchs 1 sowie ein Schleifleitungssystem mit den Merkmalen des Anspruchs 15. Vorteilhafte Weiterbildungen und Ausgestaltungen der Erfindung sind in den Unteransprüchen angegeben.

Erfindungsgemäß ist ein eingangs genannter Stromabnehmer dadurch gekennzeichnet, dass der Schleifkontakt über ein Schleifkontaktgelenk beweglich und elektrisch leitend mit dem elektrisch leitfähigen Abnehmerarm oder einem in dem Abnehmerarm und/oder daran angeordneten elektrischen Leiter verbunden ist. Hierdurch kann eine direkte und nicht mit dem Abnehmerarm in Verbindung stehende kabellose Stromübertragung zwischen dem Schleifkontakt und dem Abnehmerarm bzw. dem darin und/oder daran angeordneten elektrischen Leiter erreicht werden, so dass kein die Beweglichkeit des Schleifkontakts hemmendes oder störendes Kabel mehr notwendig ist. Insofern bedeutet kabellos, dass zusätzlich zum elektrisch leitenden Stromabnehmerarm oder den direkt daran und/oder darin angeordneten elektrischen Leitern keine weiteren Kabel oder Leiter zum Schleifkontakt oder ggf. Schleifkontakthalter geführt werden.

Bevorzugt kann das Schleifkontaktgelenk zumindest in der Zustellebene drehbar sein.

Weiter kann vorteilhaft das Schleifkontaktgelenk ein erstes Gelenkelement und ein gegenüber diesem bewegliches zweites Gelenkelement aufweisen, wobei das erste Gelenkelement direkt am oder im Schleifkontakt und/oder das zweite Gelenkelement direkt am Abnehmerarm angeordnet und/oder aus diesem ausgebildet ist. Bevorzugt können die Gelenkelemente aus einem elektrisch leitenden Material bestehen, um eine direkte elektrische Verbindung zwischen dem Schleifkontakt und dem Abnehmerarm bzw. dem darin und/oder daran angeordneten elektrischen Leiter bereitzustellen. Bevorzugt kann der Abnehmerarm aus einem elektrisch leitenden Material bestehen und/oder ein elektrischer Leiter in dem Abnehmerarm und/oder daran angeordnet sein. Weiter bevorzugt kann außer dem elektrisch leitfähigen Abnehmerarm oder dem darin und/oder daran angeordneten elektrischen Leiter keine weitere elektrische Verbindung zu dem Schleifkontakt zur Übertragung der elektrischen Leistung zu und/oder von dem Verbraucher vorgesehen werden. Der elektrische Abnehmerarm bzw. der darin und/oder daran angeordnete Leiter können bevorzugt die einzige elektrische Verbindung zum Schleifkontakt bereitstellen, wobei diese bevorzugt nur über das Schleifkontaktgelenk führt. Bevorzugt kann der elektrische Leiter aus einem oder mehreren Teilleitern bestehen.

Bevorzugt kann das Schleifkontaktgelenke ein Kugelgelenk mit einer Gelenkpfanne als erste Gelenkelement auf der einen Seite und ein darin drehbarer Kugelgelenkkopf als zweites Gelenkelement auf der anderen Seite sein. Hierdurch kann auch eine Auslenkung des Schleifkontakts in Querrichtung, z.B. bei einer Kurvenfahrt, ausgeglichen werden.

Ggf. kann statt einem Kugelgelenk auch ein zylindrisches Drehgelenk mit einem zylindrischen ersten Gelenkelement und einem entsprechend angepassten Hülsenabschnitt als zweitem Gelenkelement verwendet werden. Auch andere geeignete Gelenke können verwendet werden.

Vorteilhaft kann der Schleifkontakt in einem Schleifkontakthalter angeordnet sein, der bevorzugt aus einem elektrisch nicht leitenden Material bestehen kann. Um den Schleifkontakt einfach mit dem Schleifkontakthalter verbinden zu können, kann der Schleifkontakthalter einen Lagersitz zur Aufnahme des ersten Gelenkelements des Schleifkontaktgelenks aufweisen. Weiter kann der Schleifkontakthalter vorteilhaft eine Ausweichöffnung für den Abnehmerarm aufweisen, um eine begrenzte Rotation des Schleifkontakts um das Schleifkontaktgelenk gegenüber dem Abnehmerarm zu ermöglichen.

Weiter kann bevorzugt zwischen Schleifkontakt oder Schleifkontakthalter und Abnehmerarm mindestens ein Federelement vorgesehen sein, um den Schleifkontakt bei einer Auslenkung aus einer Ruhestellung am Abnehmerarm wieder in diese zurückzubewegen. In einer vorteilhaften Ausgestaltung sind zwei Federelemente vorgesehen, welche auf in Längsrichtung beidseits des Schleifkontaktgelenks gegenüberliegenden Seiten des Schleifkontakts bzw. Schleifkontakthalters einerseits und den gegenüberliegenden Seiten des Abnehmerarms andererseits befestigt sind.

Weiter kann der Abnehmerarm an seinem basisseitigen Ende elektrisch leitend mit der Basis und/oder der Verbindungsleitung verbunden sein. Auch hierdurch kann eine direkte und kabellose Stromübertragung zwischen dem Abnehmerarm und der Basis bzw. Verbindungsleitung erreicht werden.

Zudem kann der Abnehmerarm über ein Basisgelenk beweglich, insbesondere drehbar, und elektrisch leitend mit der Basis verbunden sein. Hierdurch wird die Beweglichkeit des Schleifkontakts verbessert. Bevorzugt kann das Basisgelenk zumindest in der Zustellebene drehbar sein.

Weiter kann vorteilhaft das Basisgelenk ein erstes Gelenkelement und ein gegenüber diesem bewegliches zweites Gelenkelement aufweisen, wobei das erste Gelenkelement direkt am Abnehmerarm angeordnet und/oder aus diesem ausgebildet ist, und/oder das zweite Gelenkelement an der Basis angeordnet und/oder aus dieser ausgebildet ist. Hierdurch kann vorteilhaft eine direkte elektrische Verbindung zwischen Abnehmerarm und Basis bzw. Verbindungsleitung bereitgestellt werden. Das Basisgelenk kann wie das oben beschriebene Schleifkontaktgelenk ausgebildet sein, insbesondere als Kugelgelenk. Dabei kann die Lage von Gelenkpfanne und drehbarem Kugelgelenkkopf beim Schleifkontaktgelenk und/oder Basisgelenk auch vertauscht sein.

Weiter kann zwischen Basisgelenk und Abnehmerarm mindestens ein Federelement vorgesehen sein, um den Abnehmerarm mit dem Schleifkontakt in Richtung der Schleifleitung zu bewegen.

Weiter kann der Abnehmerarm vorteilhaft von einer elektrischen Isolierung umgegeben sein. Hierdurch kann eine unerwünschte Berührung mit dem spannungsführenden Abnehmerarm vermieden werden. Ist der elektrische Leiter in den Abnehmerarm integriert, so kann auch der Abnehmerarm aus einem elektrisch isolierenden Material bestehen, welches vorteilhaft fest bzw. steif, ggf. aber in einem gewissen Maß elastisch ausgebildet sein kann. Weiter kann in dem Schleifkontaktgelenk und/oder dem Basisgelenk vorteilhaft ein elektrisch leitendes Schmiermittel zwischen den gegeneinander beweglichen Gelenkelementen vorgesehen sein. Hierdurch kann die Leichtgängigkeit des Gelenks einerseits und die direkte und gute Stromübertragung andererseits sichergestellt werden.

Weiter können vorteilhaft eine oder mehrere Drehachsen, um welche das Schleifkontaktgelenk und/oder das Basisgelenk drehbar sind, senkrecht auf der Zustellebene stehen.

Bevorzugt kann das Schleifkontaktgelenk und/oder das Basisgelenk einstückig mit dem Abnehmerarm ausgebildet sein, wodurch zusätzliche elektrische Kontaktwiderstände und Korrosionsstellen vermieden können. Auch kann hierdurch die Herstellung vereinfacht werden. Zusätzlich kann durch den Abnehmerarm als elektrische Verbindung zwischen dem elektrischen Verbraucher und dem Schleifkontakt Gewicht eingespart und die Montage vereinfacht werden.

Bevorzugt kann der Schleifkontakt zur Übertragung elektrische Leistung und/oder Daten zur Übertragung von elektrischer Leistung und/oder Daten zwischen der Schleifleitung und dem Verbraucher ausgebildet sein.

Erfindungsgemäß ist ein eingangs genanntes Schleifleitungssystem dadurch gekennzeichnet, dass ein wie oben und nachfolgend beschrieben ausgebildeter Stromabnehmer verwendet werden.

Die Erfindung wird nachfolgend anhand von detaillierten Ausführungsbeispielen mit Bezug auf die begleitenden Zeichnungen beschrieben. Diese zeigen:
- **Fig. 1**: eine zum Teil geschnittene dreidimensionale Schrägansicht eines erfindungsgemäßen Schleifleitungssystems mit einem erfindungsgemäßen Stromabnehmer;
- **Fig. 2**: eine teilgeschnittene Vorderansicht durch das Schleifleitungssystem aus Fig. 1.

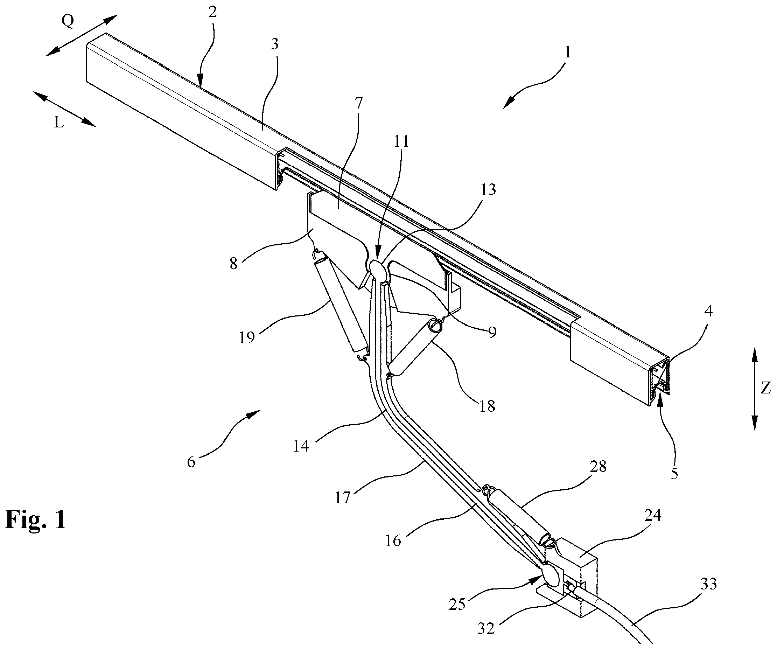

Figur 1 zeigt ein erfindungsgemäßes Schleifenleitungssystem 1 mit einer sich in eine Längsrichtung L erstreckenden Schleifleitung 2. Die Schleifleitung 2 weist ein Isolierprofil 3 aus einem elektrisch nicht leitfähigen Material auf, welches ein elektrisch leitendes Leiterprofil 4 fast vollständig umgibt. Das Leiterprofil 4 weist einen in den Zeichnungen nach unten weisenden trogförmigen Schleifabschnitt 5 auf.

Um einen nicht gezeigten, in Längsrichtung L der Schleifleitung 2 verfahrbaren elektrischen Verbraucher mit elektrischer Energie zu versorgen, ist daran ein in Längsrichtung L der Schleifleitung 2 verfahrbarer Stromabnehmer 6 mit einem Schleifkontakt 7 vorgesehen, der in den Schleifabschnitt 5 eingreift und daran in Längsrichtung L schleifend verfahrbar ist. Der Schleifkontakt 7 ist dabei vor allem in eine Zustellrichtung Z zu und von der Schleifleitung 2 bewegbar. Die Zustellrichtung Z und die Längsrichtung L spannen eine Zustellebene E auf, wobei eine Querrichtung Q hierauf senkrecht steht. Die oben beschriebene Ausgestaltung ist dem Fachmann an sich bekannt.

Der aus einem gut elektrisch leitfähigen Material, z.B. Graphit oder Aluminium, bestehende Schleifkontakt 7 ist in einem Schleifkontakthalter 8 aus elektrisch isolierendem Material, insbesondere Kunststoff oder Hartkunststoff aufgenommen. Um den Schleifkontakt 7 in dem Schleifkontakthalter 8 zu halten, weist der Schleifkontakthalter 8 eine Lageraufnahme 9 auf, welcher an die Außenkontur eines Schleifkontaktgelenks 11 des Schleifkontakts 7 angepasst ist.

Das hier beispielhaft als Kugelgelenk ausgebildete Schleifkontaktgelenk 11 weist eine aus dem Schleifkontakt 7 ausgeformten Gelenkpfanne 12 als erstes Gelenkelement auf, in das ein Gelenkkopf 13 eines elektrisch leitfähigen Abnehmerarms 14 eingreift. Die Lageraufnahme 9 ist an die sich bauchförmig aufweitende Außenkontur der Gelenkpfanne 12 angepasst, so dass der Schleifkontakt 7 bereits hierdurch in dem Schleifkontakthalter 8 gegen Herausfallen gesichert ist. Im vorliegend Fall sind die Konturen der Lageraufnahme 9 und der Gelenkpfanne 12 in Art einer Schnappverbindung aneinander angepasst, der Schleifkontakt 7 kann also unter gewisser, bevorzugt geringer Kraftanwendung aus der Lageraufnahme 9 herausgezogen bzw. in sie hineingesteckt werden, wobei der Gelenkkopf 13 dann vorteilhaft noch nicht in die Gelenkpfanne 12 eingesteckt ist. Ggf. kann der Schleifkontakthalter 8 auch aus zwei Teilen bestehen, welche seitlich auf den Schleifkontakt 7 mit bereits verbundenem Gelenkkopf 13 aufgesteckt werden.

Da das Schleifkontaktgelenk 11 als Kugelgelenk ausgebildet ist, kann sich der Schleifkontakt 7 nicht nur in der Zustellebene Z bewegen, sondern auch in der Querrichtung Q hierzu, also insbesondere um den Drehpunkt des Schleifkontaktgelenks 11 gedreht werden.

Um diese Bewegung des Schleifkontakts 7 in einem begrenzten Umfang zu ermöglichen, weist der Schleifkontakthalter 8 eine sich von der Lageraufnahme 9 und in den Zeichnungen nach unten zum Abnehmerarm 14 hin erstreckende und sich nach unten aufweitende, hier trichterförmige Ausweichöffnung 10 auf. Die Ausweichöffnung 10 kann aber auch andere Formen aufweisen, welche die begrenzte Bewegung des Schleifkontakts 7, insbesondere die Rotation um das Schleifleitungsgelenk 11, insbesondere vor allem in der Zustellebene E, erlauben. Die Ausweichöffnung 10 dient vorteilhaft auch als Begrenzung der Bewegung des Schleifkontakts 11, um ein zu starkes Verkippen des Schleifkontakts 7 gegenüber der Längsrichtung L, insbesondere auch in der Zustellebene E zu verhindern.

Der Abnehmerarm 14 weist einen kontaktseitigen Abschnitt 15 auf, an dem der Gelenkkopf 13 einstückig angeformt ist. Hierdurch wird eine sehr gute Stromübertragung zwischen dem Schleifkontakt 7 und dem Abnehmerarm 14 über das Schleifkontaktgelenk 11 erreicht. Bevorzugt kann in dem Schleifkontaktgelenk 11 ein elektrisch leitendes Schmiermittel vorgesehen seien, so dass eine möglichst reibungsarme und verschleißarme Bewegung des Schleifkontaktgelenks 11 möglich ist.

Der kontaktseitige Abschnitt 15 ist im Betrieb weitgehend in Zustellrichtung Z ausgerichtet, während ein sich daran anschließender basisseitiger Abschnitt 16 des Abnehmerarms 14 gegenüber dem Abschnitt 15 abgeknickt ist und schräg zur Längsrichtung L und der Zustellrichtung Z verläuft. Der basisseitige Abschnitt 16 des Abnehmerarms 14 weist dabei ungefähr die doppelte Länge des kontaktseitigen Abschnitts 15 auf. Es können aber auch andere Verhältnisse eingestellt werden, wobei das obige beschriebene Verhältnis eine in Zustellrichtung Z niedrige und kompakte Bauweise ermöglicht.

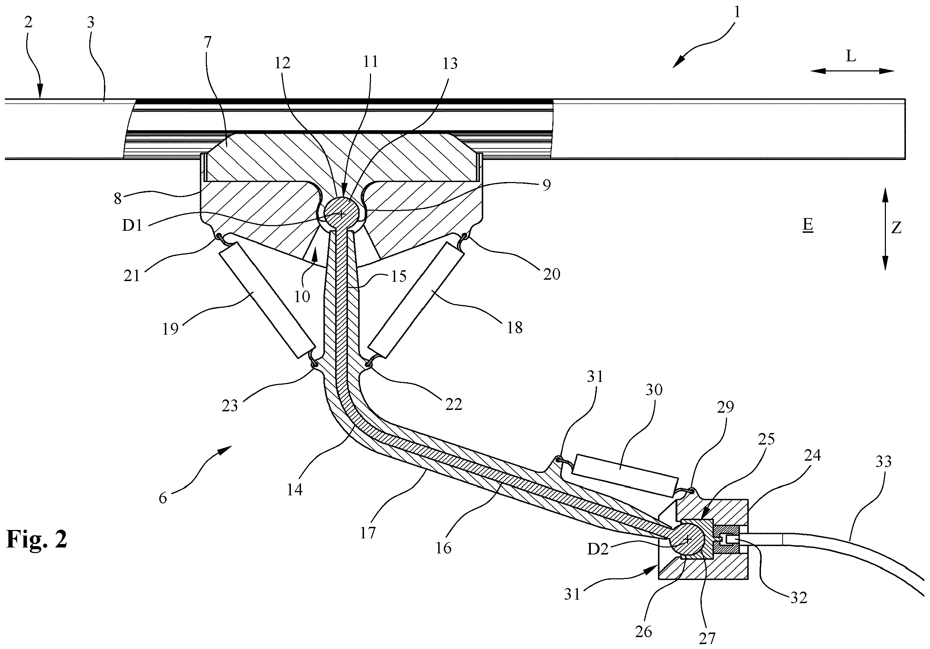

Der Abnehmerarm 14 ist von einer elektrisch nicht leitfähigen Armisolierung 17 umgeben, um einen unerwünschten Kontakt von Gegenständen oder Personen mit dem spannungsführenden Abnehmerarm 14 zu verhindern. Dabei dient die Armisolierung 17 hier zusätzlich noch dazu, um zwischen Stromabnehmerarm 14 und dem Schleifkontakthalter 8 Federelemente 18 bzw. 19 anzubringen. Die Federelemente 18 bzw. 19 halten den Schleifkontakthalter 8 mit dem Schleifkontakt 7 in der in Fig. 2 gezeigten Ruhestellung, sodass der Schleifkontakt 7 möglichst gleichmäßig und über seine gesamte Länge an dem Leiterprofil 4 der Schleifleitung 2 anliegt. Hierzu sind am Schleifkontakthalter 8 in Längsrichtung L beidseits des Schleifkontaktgelenks 11 kontaktseitige Befestigungspunkte 20, 21 vorgesehen, welche bevorzugt einen größeren Abstand zum Schleifkontaktgelenk 11 aufweisen, bevorzugt in Längsrichtung L. Entsprechend sind an der Armisolierung 17 in Längsrichtung L beidseits des Stromabnehmerarms 14 armseitige Befestigungspunkte 22, 23 vorgesehen. Die Befestigungspunkte 20 bis 23 weisen dabei Durchstecköffnungen auf, in welche freie Enden von Befestigungsösen der als Schraubenfedern ausgebildeten Federelemente 18, 19 durchgesteckt werden können, was die Montage erleichtert. Es können gegebenenfalls aber auch andere Federelemente und Befestigungsarten verwendet werden. Die Federelemente 18, 19 werden so angeordnet, dass der Schleifkontakt 7 im Betrieb möglichst in Längsrichtung L verläuft, also über seine gesamte Länge möglichst plan und bündig an dem Leiterprofil 4 anliegt bzw. bei einem verfahrbedingten Ausweichen aus der Längsrichtung L wieder in diese Anlagestellung zurückbewegt wird.

Der basisseitige Abschnitt 16 des Abnehmerarms 14 ist an einer Befestigungsbasis 24 über ein Basisgelenk 25 sowohl mechanisch als auch elektrisch angelenkt. Dabei ist das Basisgelenk 25 wieder als Kugelgelenk ausgebildet und weist einen am Abnehmerarm 14 einstückig ausgebildeten Gelenkkopf 26 auf, der in einer an der Befestigungsbasis 24 angeordneten Gelenkpfanne 27 des Basisgelenks 25 beweglich gelagert ist. Dabei kann wieder vorteilhaft einen elektrisch leitendes Schmier- oder Gleitmittel im Basisgelenk 25 vorgesehen sein, um den Verschleiß und die Reibung darin möglichst zu reduzieren.

Ggf. kann die Lage der Gelenkpfanne 12, 27 und des drehbaren Gelenkkopfs 13, 26 beim Schleifkontaktgelenk 11 und/oder Basisgelenk 25 auch vertauscht sein.

Der das Basisgelenk 25 umgebende Teil der Befestigungsbasis 24 ist aus Isolationszwecken wiederum aus einem elektrisch nicht leitfähigen Material ausgebildet. Die Armisolierung 17 reicht dabei vorteilhaft vom Schleifkontaktgelenk 11 bis zum Basisgelenk 25, und bevorzugt vom Gelenkkopf 13 zum Gelenkkopf 26.

Um den Abnehmerarm 14 beständig auf die Schleifleitung 2 hin zu halten, ist eine Anstellfeder 28 zwischen Abnehmerarm 14 und Befestigungsbasis 24 vorgesehen. Die als Schraubenfeder ausgebildete Anstellfeder 28 ist wiederrum einerseits an einem basisseitigen Befestigungspunkt 29 der Befestigungsbasis 24 und andererseits an einem armseitigen Befestigungspunkt 30 an der Armisolierung 17 angeordnet. Die Anstellfeder 28 sowie die Befestigungspunkte 29 und 30 sind so ausgebildet wie das erste bzw. zweite Federelement 18, 19 und die zugehörigen Befestigungspunkt 20-23, alternative Ausgestaltungen sind auch hier denkbar.

An dem zum Abnehmerarm 14 offenen Teil des Basisgelenks 25 ist wieder eine zumindest teilweise trichterförmige Ausweichöffnung 31 vorgesehen, um dem Abnehmerarm 14 die Bewegung in der Zustellebene E und ggf. auch in der Querrichtung Q zu ermöglichen, insbesondere also die Rotation in der Zustellebene E bzw. um den Drehpunkt des Basisgelenks 25.

Das Basisgelenk 25 ist elektrisch leitend mit einem in der Befestigungsbasis 24 aufgenommenen Leitungsanschluss 32 verbunden. Mit dem Leitungsanschluss 32 ist eine Verbindungsleitung 33 zum elektrischen Verbraucher elektrisch leitend verbunden, beispielsweise mit einem Stecker eingesteckt oder einer Klemmvorrichtung darin befestigt.

Durch die oben beschriebene Ausgestaltung wird eine direkte elektrische Verbindung zwischen dem Schleifkontakt 7 und dem Abnehmerarm 14 sowie dem Abnehmerarm 14 und dem Basisgelenk 25 bereitgestellt, sodass kein Kabel zum Schleifkontakt 7 parallel zum Abnehmerarm 14 geführt werden muss. Der Abnehmerarm 14 mit Schleifkontakt 7 baut deshalb kompakt und leicht, wobei seine Bewegungsfreiheit, insbesondere um das Schleifkontaktgelenk 11 und das Basisgelenk 25, nicht durch die Kabelführung behindert wird.

In der vorliegenden Ausgestaltung ist der Abnehmerarm 14 mit den daran angeordneten Gelenkköpfen 13 bzw. 26 einstückig aus einem elektrisch leitfähigen Material hergestellt. Gegebenenfalls können vorteilhaft aber auch unterschiedliche elektrisch leitfähige Materialien verwendet werden und/oder die Gelenkköpfe 13 und/oder 26 auch als separate Teile am Abnehmerarm 14 angebracht werden. Die vorliegende Ausgestaltung ist insofern günstig, da hier außer an den beiden Kontaktstellen in den Gelenken 11 und 25 keine weiteren elektrischen Kontaktwiderstände den Stromfluss behindern. Auch kann hierdurch Korrosion verhindert werden.

Auch kann der Abnehmerarm 14 als Rohr oder Hülse mit einem Innenkanal ausgebildet sein, in dem ein das Schleifkontaktgelenk 11 und/oder das Basisgelenk 25 elektrisch kontaktierender elektrischer Leiter geführt ist. Insofern kann der Abnehmerarm 14 dann auch aus einem elektrisch isolierenden Material bestehen, beispielsweise Kunststoff oder Hartkunststoff. Der Leiter kann vorteilhaft auch aus mehreren elektrischen Teilleitern bestehen. Ggf. kann der elektrische Leiter auch am Abnehmerarm angeordnet sein, der dann nicht aus einem Rohr oder Hülse gebildet sein muss. Auch in diesem Fall ist maßgeblich, dass kein weiterer elektrischer Leiter oder Kabel zum Schleifkontakt führt.

Ggf. kann die Armisolierung 17 auch weggelassen werden, so dass die armseitigen Befestigungspunkte 22, 23 und 30 direkt an dem Abnehmerarm 14 angeordnet werden. Ebenso kann ggf. auch der Schleifkontakthalter 8 weggelassen werden. Dann können bevorzugt die kontaktseitigen Befestigungspunkte 20, 21 direkt am Schleifkontakt 7 angeordnet, angeformt oder aus diesem ausgebildet werden.

Anstelle der oben beschriebenen Kugelgelenke 11, 25 können auch anderer Arten von Drehgelenken verwendet werden, beispielsweise zylindrische Drehgelenke mit einem zylindrischen ersten Gelenkelement, welche in einen entsprechend angepassten Hülsenabschnitt als zweitem Gelenkelement eingreift. Dann drehen sich die Gelenkelemente bevorzugt um senkrecht auf der Zustellebene E stehende Drehachsen D1 bzw. D2. Weiter kann anstelle der oben beschriebenen Ausgestaltung die Lage der Gelenkkugelpfannen auch vertauscht sein, also die Lage der Gelenkpfanne 12, 27 und des drehbaren Gelenkkopfs 13, 26 vertauscht werden.

### Bezugszeichenliste

- 1: Schleifleitungssystem
- 2: Schleifleitung
- 3: Isolierprofil
- 4: Stromschiene, Leiterprofil
- 5: trogförmiger Schleifabschnitt
- 6: Stromabnehmer
- 7: Schleifkontakt
- 8: Schleifkontakthalter
- 9: Lagersitz Schleifkontakthalter
- 10: Ausweichöffnung, -trichter
- 11: Schleifkontaktgelenk
- 12: Gelenkpfanne Schleifkontaktgelenk (erstes Gelenkelement)
- 13: Gelenkkopf Schleifkontaktgelenk (zweites Gelenkelement)
- 14: elektrische leitfähiger Abnehmerarm
- 15: kontaktseitiger Abschnitt des Abnehmerarms
- 16: basisseitiger Abschnitt des Abnehmerarms
- 17: Armisolierung
- 18: erstes Federelement, insbesondere Schraubenfeder
- 19: zweites Federelement, insbesondere Schraubenfeder
- 20, 21: kontaktseitige Befestigungspunkte erstes bzw. zweites Federelement
- 22, 23: armseitige Befestigungspunkte erstes bzw. zweites Federelement
- 24: Befestigungsbasis
- 25: Basisgelenk
- 26: Gelenkkopf Basisgelenk (erstes Gelenkelement)
- 27: Gelenkpfanne Basisgelenk (zweites Gelenkelement)
- 28: Anstellfederelement, insbesondere Schraubenfeder
- 29: basisseitiger Befestigungspunkt Anstellfederelement
- 30: armseitiger Befestigungspunkt Anstellfederelement
- 31: Ausweichöffnung, -trichter
- 32: Leitungsanschluss
- 33: Verbindungsleitung
- D1: Drehachse Schleifkontaktgelenk
- D2: Drehachse Basisgelenk
- E: Zustellebene, Abnehmerarmebene
- L: Längsrichtung Schleifleitung, Längsrichtung Stromabnehmer
- Q: Querrichtung
- Z: Zustellrichtung Schleifkontakt

## Patentansprüche

1. Stromabnehmer (6) zur elektrischen Versorgung eines längs einer Schleifleitung (2) bewegbaren elektrischen Verbrauchers, mit mindestens einem längs der Schleifleitung (2) verfahrbaren Schleifkontakt (7) zur schleifenden Kontaktierung mit einem in eine Längsrichtung (L) der Schleifleitung (2) verlaufenden elektrisch leitenden Leiterprofil (4) der Schleifleitung (2), wobei der Schleifkontakt (7) an einem an einer Basis (24) des Stromabnehmers (6) angeordnetem Abnehmerarm (14) in eine Zustellrichtung (Z) zu und von der Schleifleitung (2) weg bewegbar angeordnet ist, wobei die Längsrichtung (L) und die Zustellrichtung (Z) eine Zustellebene (E) aufspannen, **dadurch gekennzeichnet, dass** der Schleifkontakt (7) über ein Schleifkontaktgelenk (11) beweglich und elektrisch leitend mit dem elektrisch leitfähigen Abnehmerarm (14) oder einem in dem Abnehmerarm (14) und/oder daran angeordneten elektrischen Leiter verbunden ist.

2. Stromabnehmer (6) nach Anspruch 1, **dadurch gekennzeichnet, dass** das Schleifkontaktgelenk (11) zumindest in der Zustellebene (E) drehbar ist.

3. Stromabnehmer (6) nach Anspruch 1 oder 2, **dadurch gekennzeichnet, dass** das Schleifkontaktgelenk (11) ein erstes Gelenkelement (12) und ein gegenüber diesem bewegliches zweites Gelenkelement (13) aufweist, wobei das erste Gelenkelement (12) direkt am oder im Schleifkontakt (7) und/oder das zweite Gelenkelement (13) direkt am Abnehmerarm (14) angeordnet und/oder aus diesem ausgebildet ist.

4. Stromabnehmer (6) nach einem der voranstehenden Ansprüche, **dadurch gekennzeichnet, dass** der Schleifkontakt (7) in einem Schleifkontakthalter (8) (8) angeordnet ist.

5. Stromabnehmer (6) nach Anspruch 4, **dadurch gekennzeichnet, dass** der Schleifkontakthalter (8) eine Lageraufnahme (9) zur Aufnahme des ersten Gelenkelements (12) des Schleifkontaktgelenks (11) aufweist.

6. Stromabnehmer (6) nach Anspruch 4 oder 5, **dadurch gekennzeichnet, dass** der Schleifkontakthalter (8) eine Ausweichöffnung (10) für den Abnehmerarm (14) aufweist, um eine begrenzte Rotation des Schleifkontakts (7) um das Schleifkontaktgelenk (11) gegenüber dem Abnehmerarm (14) zu ermöglichen.

7. Stromabnehmer (6) nach einem der voranstehenden Ansprüche, **dadurch gekennzeichnet, dass** zwischen Schleifkontakt (7) und Abnehmerarm (14) mindestens ein Federelement (18, 19) vorgesehen ist, um den Schleifkontakt (7) bei einer Auslenkung aus einer Ruhestellung am Abnehmerarm (14) wieder in diese zurückzubewegen.

8. Stromabnehmer (6) nach einem der voranstehenden Ansprüche, **dadurch gekennzeichnet, dass** die Basis (24) mit einer elektrischen Verbindungsleitung (33) zum elektrischen Verbraucher verbunden ist und/oder der Abnehmerarm (14) an seinem basisseitigen Ende elektrisch leitend mit der Basis (24) und/oder der Verbindungsleitung (33) verbunden ist.

9. Stromabnehmer (6) nach einem der voranstehenden Ansprüche, **dadurch gekennzeichnet, dass** der Abnehmerarm (14) über ein Basisgelenk (25) beweglich, insbesondere drehbar, und elektrisch leitend mit der Basis (24) verbunden ist.

10. Stromabnehmer (6) nach Anspruch 9, **dadurch gekennzeichnet, dass** das Basisgelenk (25) zumindest in der Zustellebene (E) drehbar ist.

11. Stromabnehmer (6) nach Anspruch 9 oder 10, **dadurch gekennzeichnet, dass** das Basisgelenk (25) ein erstes Gelenkelement (26) und ein gegenüber diesem bewegliches zweites Gelenkelement (27) aufweist, wobei das erste Gelenkelement (26) direkt am Abnehmerarm (14) angeordnet und/oder aus diesem ausgebildet ist, und/oder das zweite Gelenkelement (27) an der Basis (24) angeordnet und/oder aus dieser ausgebildet ist.

12. Stromabnehmer (6) nach einem der voranstehenden Ansprüche, **dadurch gekennzeichnet, dass** zwischen Basisgelenk (25) und Abnehmerarm (14) mindestens ein Federelement (28) vorgesehen ist, um den Abnehmerarm (14) mit dem Schleifkontakt (7) in Richtung der Schleifleitung (2) zu bewegen.

13. Stromabnehmer (6) nach einem der voranstehenden Ansprüche, **dadurch gekennzeichnet, dass** der Abnehmerarm (14) von einer elektrischen Isolierung (17) umgegeben ist.

14. Stromabnehmer (6) nach einem der voranstehenden Ansprüche, **dadurch gekennzeichnet, dass** in dem Schleifkontaktgelenk (11) und/oder dem Basisgelenk (25) ein elektrisch leitendes Schmiermittel zwischen den gegeneinander beweglichen Gelenkelementen (12, 13; 26, 27) vorgesehen ist, und/oder dass eine oder mehrere Drehachsen (D1, D2), um welche das Schleifkontaktgelenk (11) und/oder das Basisgelenk (25) drehbar sind, senkrecht auf der Zustellebene (E) stehen.

15. Schleifleitungssystem (1) mit einer in eine Längsrichtung (L) verlaufenden Schleifleitung (2) mit einem in Längsrichtung (L) verlaufenden elektrisch leitenden Leiterprofil (4) und einem Stromabnehmer (6) zur elektrischen Versorgung eines längs der Schleifleitung (2) bewegbaren elektrischen Verbrauchers, **dadurch gekennzeichnet, dass** der Stromabnehmer (6) nach einem der voranstehenden Ansprüche ausgebildet ist.
